# EUROPEAN PATENT SPECIFICATION

(11) **EP 4 062 064 B1**
(45) Date of publication and mention of the grant of the patent: **26.11.2025**
(21) Application number: 20888939.4
(22) Date of filing: 17.11.2020
(51) Int. Cl.: F03G 1/02

(54) **ELASTIC MOTOR**
ELASTISCHER MOTOR
MOTEUR ÉLASTIQUE

(30) Priority: 18.11.2019 RO 201900756
(43) Date of publication of application: 28.09.2022
(73) Proprietor: Sangeorzan, Mircea, 420134 Bistrita jud. Bistrita Nasaud (RO)
(72) Inventor: SÂNGEORZAN, Paul, 420134 Bistrita, jud. Bistrita Nasaud (RO); SÂNGEORZAN, Patrick, 420134 Bistrita, jud. Bistrita Nasaud (RO); SÂNGEORZAN, Mircea, 420134 Bistrita, jud. Bistrita Nasaud (RO)
(74) Representative: Teodorescu, Mihaela
(86) International application number: PCT/RO2020/050011
(87) International publication number: WO 2021/101400

(56) References cited:
- EP-A1- 2 096 332
- CN-A- 102 491 128
- CN-A- 102 661 257
- GB-A- 486 240
- RU-C1- 2 150 625
- SU-A1- 1 686 219
- US-A- 4 762 202

## Description

The invention relates to an ecological elastic motor, usable for obtaining a continuous rotary motion.

It is known in the art an elastic motor having a rotary shaft on which the end of a thread-like elastic member is fixed, which is wound well stretched on the shaft, the other end of the elastic member being fixed to a non-removable support. By stretching the elastic member wound on the rotary shaft, an elastic force is stored whose release causes the shortening back of the elastic member, that is the rotation of the shaft in the opposite direction to that at the moment of the winding.

The known motor has the drawback that the relatively limited length of the thread-like elastic member makes the unwinding duration to be short, after that a new winding/unwinding cycle is required - which makes that the operation of this motor to be discontinuous.

US Patent No. 2814907 discloses a flying toy driven by a rubber band elastic motor comprising a rectangular base frame with a vertical bar which is in contact with a hook from which an elastic rubber band is hooked, at the opposite end being provided a bearing in which a shaft is rotating which has at an end a second hook from which the elastic band is fixed and at the opposite part, integral to the shaft, a propeller and which is developing a limited rotary motion.

CN 102 661 257 A discloses a rubber belt type energy accumulator and aims to provide a novel rubber belt type energy accumulator which is high in energy transformation ratio, high in energy density, light in weight and simple in structure. The rubber belt type energy accumulator comprises an end cover, a casing, a rubber belt, a rotary drum, multiple guiding rolling shafts, a power transmission shaft, a brake shaft and a brake device, wherein the rubber belt is supported by the multiple guiding rolling shafts to extend along an approximate Archimedes spiral. The rubber belt type energy accumulator can be used for storing and transforming kinetic energy; in the energy accumulation process, the kinetic energy inputted to the energy accumulator can be stored in the form of rubber belt elastic potential energy; and in the energy releasing process, the elastic potential energy stored in the rubber belt is transformed into kinetic energy which is outputted to the external environment.

Document EP 2 096 332 A1 discloses a circular elastic member 2, 2a that is supported on a lower side on a three-point-connection formed by a wheel 3 and two pulleys 5, 5a and on an upper side on two pulleys 4, 4a and two eccentric rollers 1, 1a activated by a driving shaft. The elastic member 2, 2a is alternatively deformed out of circular shape and formed back into circular shape by an arrangement of a lever 6 and an arm 7 in conjunction with the intermittent contact of driving eccentric rollers 1, 1a on elastic member 2, 2a. A driven shaft Vr is activated by the movement of member 2, 2a.

The technical problem solved by the present invention consists in making a motor with rotary operation that overcomes the discontinuity of the operation.

The elastic motor according to the invention, solves the above-mentioned technical problem and overcome the drawbacks of known elastic motors in that it comprises at least a first annular-shaped elastic member, supported by means of at least a first bracket assembly consisting of a supporting bracket located between a first pressing bracket and a second pressing bracket for carrying out the straining of said at least first elastic member, the brackets being fixed on a base plate, on a circular path according to the projection of the circumference of the elastic member, wherein the distance between the second pressing bracket and the supporting bracket is bigger than the distance between the first pressing bracket and the supporting bracket and wherein the supporting bracket comprises at least a first shaft with a supporting projection of said at least first elastic member and each first and second pressing bracket comprise at least a first shaft provided with a pressing projection which is pressing said at least first elastic member on the opposite face of the elastic member abutting on the supporting projection, those first shafts belonging to the first pressing bracket, respectively to the second pressing bracket, being fixed in a first balancer of the second pressing bracket, respectively in another first balancer of the first pressing bracket, pivoting about a shaft fixed in the second pressing bracket, respectively in the first pressing bracket, and adjusting screws, one for the second pressing bracket, respectively another one for the first pressing bracket, whose rotation determines the translation of a threaded bushing connected to those first balancers of the second pressing bracket, respectively of the first pressing bracket, determining the movement of said first balancers and straining of said first elastic member and at the end of that first shaft of the supporting bracket, situated at the end from the exterior of the base plate, being provided with a gear for transmitting the rotary motion to a consumer not shown.

In an embodiment of the invention, when there is a plurality of elastic members, at the end of each shaft belonging to the supporting bracket, situated at the end from the center of the base plate, there is fixed a part which takes over the rotary motion of said shaft and which is connecting to at least another neighboring part, that takes over the rotary motion of another shaft provided on the supporting bracket, by means of an appropriate mechanism for taking over the rotary motion of each shaft and the transmission thereof by means of the gear to a consumer.

The mechanism for taking over the rotary motion of multiple shafts could be with gears, belts or transmission chains.

In a preferred embodiment of the invention the distance between the second pressing bracket and the supporting bracket is double the distance between the first pressing bracket and the supporting bracket.

In a further embodiment of the invention, when for supporting the elastic member a plurality of bracket assemblies is used, said supporting brackets are equidistantly arranged on the circular path projected by the circumference of the elastic member.

The annular-shaped elastic member is in form of a band whose faces which come in contact with the supporting projections, respectively with the pressing projections, have a concave groove for the positioning in respect to a convex profile of said projections. The base plate is attached to a frame not shown, with some assembly elements.

For the operation of the elastic motor according to the invention, in the initial phase, one or more elastic members are abutting on the supporting projections of the supporting bracket, and the pressing projections of the first pressing bracket and of the second pressing bracket are in contact with the face of the elastic members that is opposed to the face on support. In the second phase, the adjusting screws of the second pressing bracket are rotating, determining the balancers corresponding to the second pressing bracket to swing around the shafts, such that the pressing projections press on the elastic members, determining the elastic deformation of the elastic members and the occurrence thereon of a tangential component, at the second pressing bracket, and of a reaction force, at the supporting bracket, in this moment, the highest level of the elastic members being very close to the supporting bracket in the direction of the first pressing bracket. In order for the rotary motion to be achieved, the slant of the portion of the elastic member comprised between the position of the supporting bracket and the position on the first pressing bracket must be changed, such that, in the third phase, the adjusting screws of the first pressing bracket are driven, for swinging the two balancers corresponding to the first pressing bracket until the moment when the highest level of the elastic members moves at the point situated between the supporting bracket and the second pressing bracket. Due to the way the balancers are arranged on the first pressing bracket and due to the fact that the pressing force, in the strained phase, is perpendicular to the elastic member, at the contact between the first pressing bracket and the elastic member, no tangential component is occurring. After carrying out this action, the rotary motion of the elastic members is starting. The further the highest level of the elastic member is from the supporting bracket but not further than half of the distance between the supporting bracket and the second pressing bracket, the faster the elastic members are rotating and with a higher force, due to the fact that in the portion of the elastic member comprised between each shaft of the supporting bracket and the second pressing bracket a slant occurs and a tangential force from the decomposition of the force in the slanted portion which pushes the elastic member in the same direction.

The shorter the distance between the first pressing bracket and the supporting bracket is, the higher the straining of the elastic member becomes and higher slant of the elastic ring occurs leading to the occurrence of forces in the slanted portion, until the energy stored therein, produces the movement of the elastic member from the pressing projection of the second pressing bracket and respectively the supporting projection of the supporting bracket, towards the pressing projection of the first bracket due to the occurrence of the tangential forces.

The elastic members continuously move due to the decomposition of the forces between the elastic members and the projections of the supporting bracket and of the first and second pressing bracket, as well as the action and reaction of the annular elastic member. The rotation of the elastic members determines the rotation of every shafts of the supporting bracket wherefrom, by means of the member for the transmission of the movement, reaches a consumer not shown. The motor according to the invention has a continuous rotary movement, which is obtained at the level of the member for transmission of the rotary movement.

The elastic motor according to the invention can be made with a single or more annular-shaped elastic member, accounting up to 50 elastic members and with a single bracket assembly or with more bracket assemblies, depending of the diameter of the annular-shaped elastic member and of the number of elastic members.

The advantage of the elastic motor according to the invention consist in that it has a simple construction, easy to implement in practice, does not require any adjustment from the operator, ensuring a continuous ecological operation, and can be automated in order to start from an on/off button.

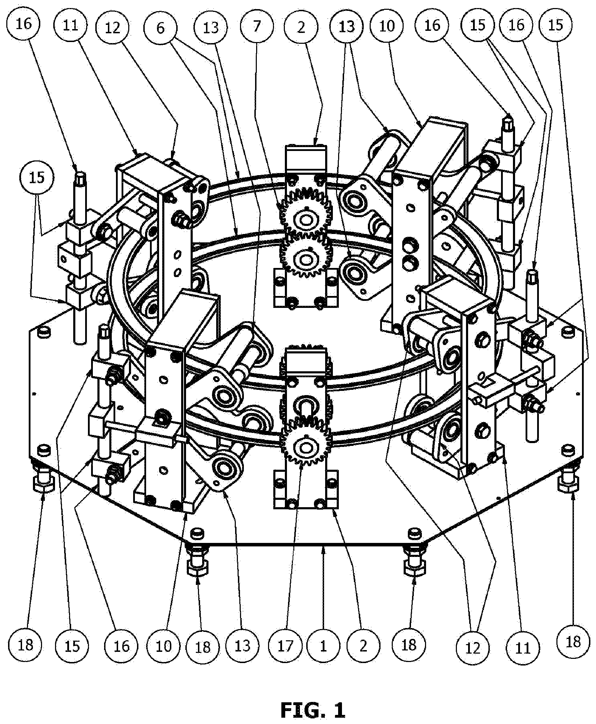

In the followings, an embodiment of the elastic motor according to the invention is given, in relation with the figures 1 ÷ 12, representing:
Fig.1 - a three-dimensional view of the elastic motor according to the invention, in unstrained state (initial)

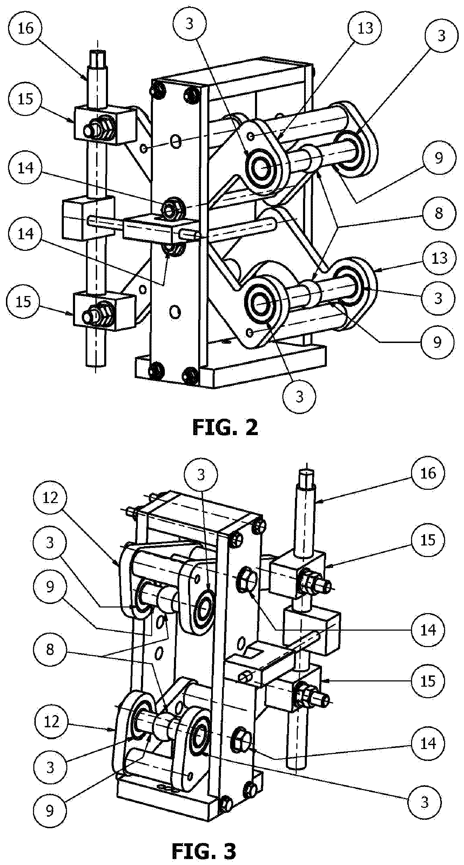

Fig. 2 - a three-dimensional view of the first pressing bracket 10 of the elastic motor of fig. 1
Fig. 3 - a three-dimensional view of the second pressing bracket 11 of the elastic motor of fig. 1

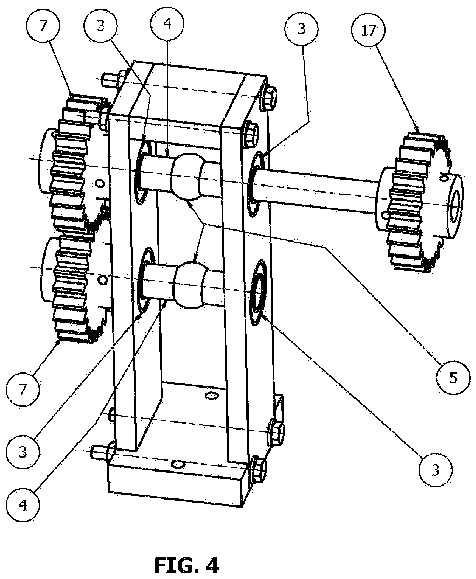

Fig. 4 - a three-dimensional view of the supporting bracket 2 of the elastic motor of fig. 1

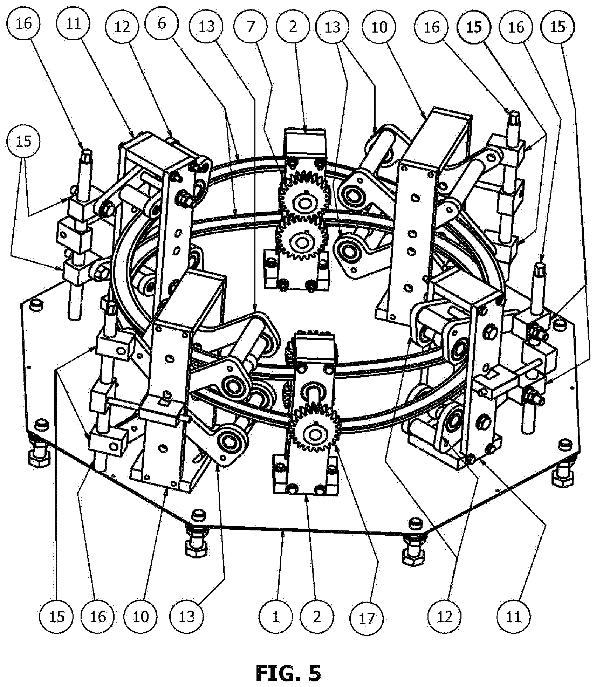

Fig. 5 - a three-dimensional view of the elastic motor according to the invention, in a strained state

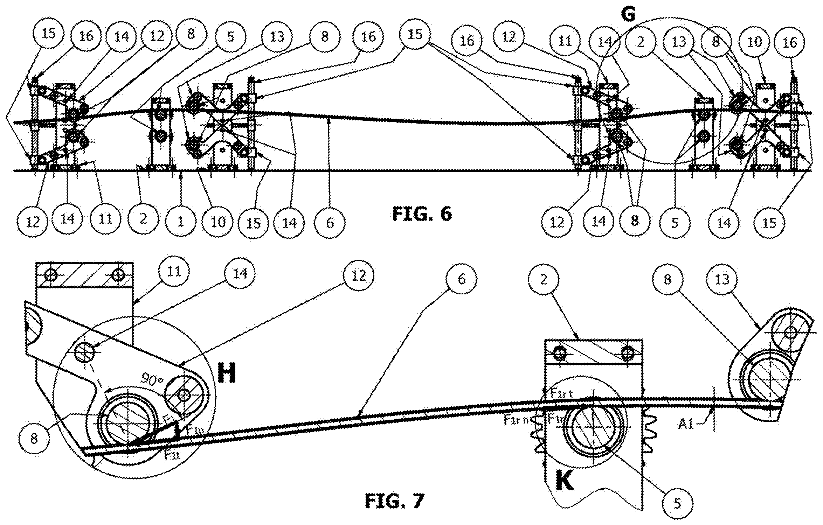

Fig. 6 - a longitudinal cross-section expanded view through the elastic motor, after the driving of screws 16 of the second pressing brackets 11
Fig. 7 - the detail G of fig. 6

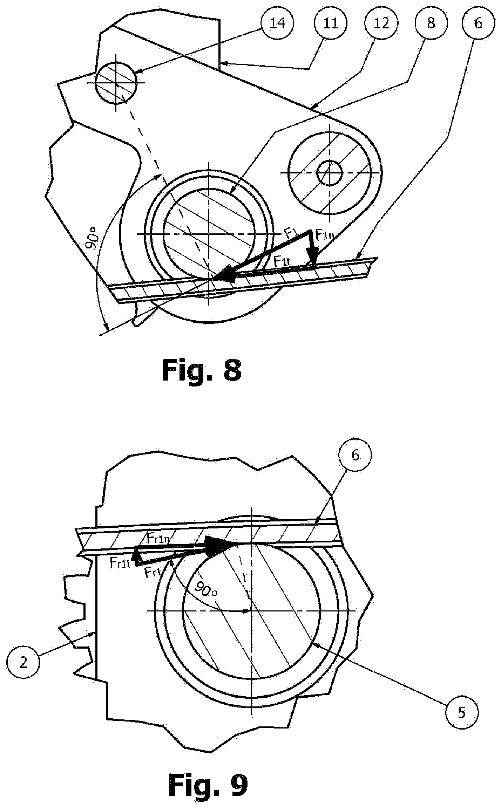

Fig. 8 - the detail H of fig. 7
Fig. 9 - the detail K of fig. 7

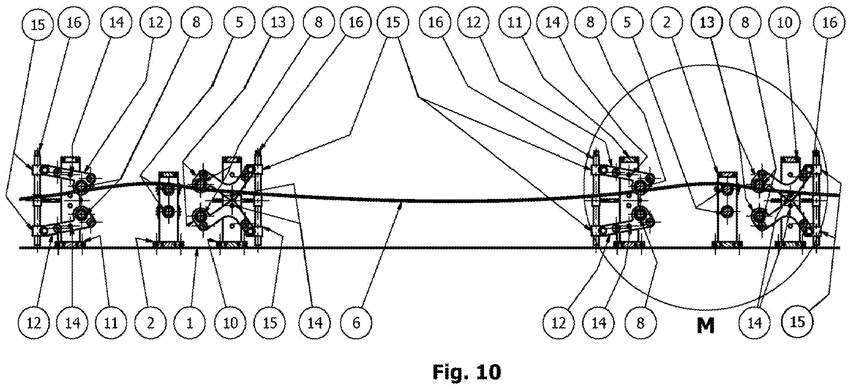

Fig. 10 - a longitudinal cross-section expanded view through the elastic motor after the driving of screws 16 of the first pressing brackets 10,

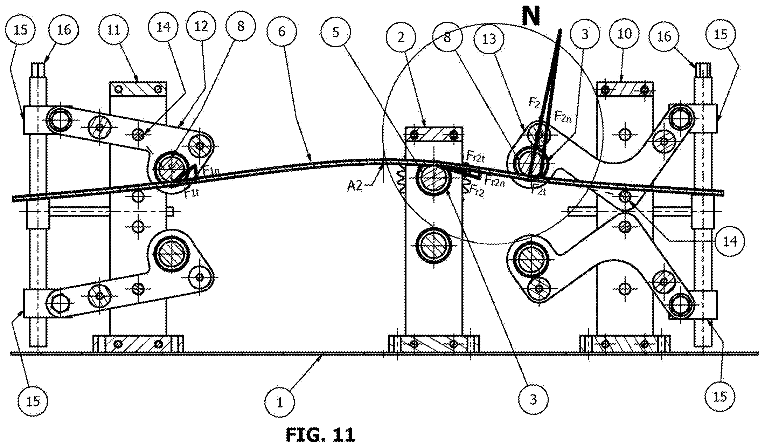

Fig. 11 - the detail M of fig. 10

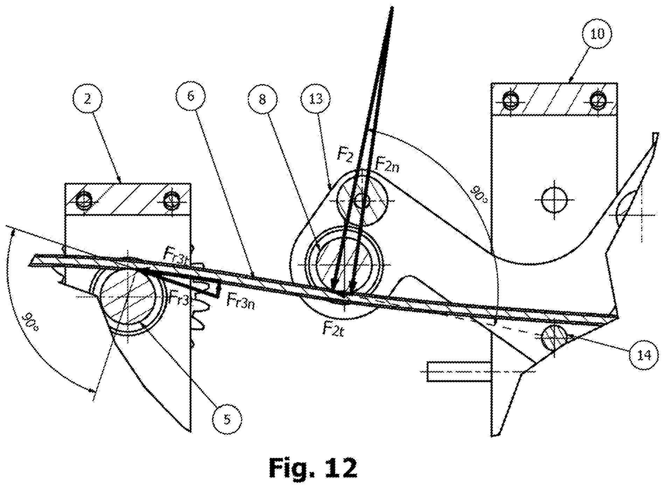

Fig. 12 - the detail N of fig. 11

Figure 1 presents an embodiment of an elastic motor according to the invention which contains a base plate **1** and two annular-shaped elastic members **(6)** which are supported by means of two bracket assemblies **(2,10,11),** each bracket assembly **(2,10,11)** consisting of a supporting bracket **(2)** located between a first pressing bracket (**10**) and a second pressing bracket **(11),** the two bracket assemblies being fixed on the base plate **(1),** on circular path, in antipodal positions. The supporting bracket **2** is provided with two pairs of bearings **3** in which two shafts **4** are located, on which a supporting and contacting projection **5** with the elastic members **6** is situated. At the end of each shaft **4** situated at the end from the center of the base plate **1,** a part **7** in form of a gear is rigidly mounted that takes over the rotary motion of the shaft **4,** and that are meshing one to each other. The annular-shaped elastic members **6** abut on the projections **5** and in the same time come in contact with some pressing projections **8** situated on a shaft **9** of pressing brackets, including a first pressing bracket **10**, respectively a second pressing bracket **11,** fixed on the base plate **1,** the second pressing bracket **11** being arranged at a distance in respect to the supporting bracket **2** which is double as compared to the distance between the first pressing bracket **10** and the supporting bracket **2.** The pressing projections **8** act on the opposite face of the elastic members **6** in respect to the supporting projections **5.** The shafts **9** are fixed in some bearings **3,** of first balancers **12** of the second pressing bracket **11,** respectively of other first balancers **13** of the first pressing bracket **10**, that can pivot about an inherent shaft **14** fixed in the second pressing bracket **11,** respectively in the first pressing bracket **10** due to the translation of threaded bushings **15,** connected to the first balancer **12,** respectively with the other first balancer **13,** which are driven by the rotation of an adjusting screw **16** that is rotatable, but cannot axially move and which has a left-hand/right-hand thread. The elastic members **6** are in form of a band whose faces which come in contact with the supporting projections, respectively the pressing projections, have a concave groove **a,** which interacts for positioning and driving with a convex profile **b** of the supporting projections **5** and of the pressing projections **8** corresponding to the second pressing bracket **11,** respectively of the pressing projections **8** corresponding to the first pressing bracket **10**. At the end of one of the shafts **4,** situated at the end from the exterior of the base plate, a gear **17** is mounted, for the transmission of the rotary motion to a consumer not shown. The base plate **1** is attached to a frame, not shown, with some assembly elements **18.**

In the initial phase, the elastic members **6** abut on the supporting projections **5,** and the pressing projections **8** are in contact with the opposite face of the elastic members **6.** In the second phase, the adjusting screws **16** of the second pressing brackets **11** rotate, determining the first balancers **12** to swing about shafts **14,** such that the pressing projections **8** press with a force **F₁** on the elastic members **6,** determining the elastic deformation of the elastic members **6** and the occurrence thereon of a tangential component **F₁ₜ** at the second pressing bracket **11** and of a reaction force **Fᵣ₁** at the supporting bracket **2,** in this moment, the highest level **A1** of the elastic members **6** being between the supporting brackets **2** and the first pressing brackets **10**. In order for the rotary motion to be achieved, it is necessary that the slant of the portion of the elastic member **6** comprised between the position of the supporting bracket **2** and the position on the first pressing bracket **10** is changed, opposite in respect to the current slant, that being the reason why in the third phase the adjusting screws **16** of the first pressing brackets **10** are driven for the swinging of the two balancers **13** until the moment when the highest level of the elastic members **6** moves to the point **A2** situated between the supporting brackets **2** and the second pressing brackets **11,** determining the occurrence of a force **F₂** at the first pressing bracket **10** and of a reaction force **Fᵣ₂** at the supporting bracket **2,** as well as of tangential components **F₂ₜ** and respectively **Fᵣ₂ₜ**. After the completion of this action, the rotary motion of the elastic members **6** starts. The further the highest level **A2** is from the supporting bracket **2,** but not further then half of the distance between the supporting bracket **2** and the second pressing bracket **11,** the faster the elastic members **6** are rotating and with a higher force, due to the fact that the tangential forces **F₁ₜ** and **Fᵣ₂ₜ** from the second pressing brackets **11** and respectively from the supporting brackets **2** push the elastic members **6** in the same direction. The elastic members **6** are continuously rotating in contact with the projections of all shafts **4** and **9** due to the decomposition of the forces between the elastic members **6,** respectively of the slanted portions of the elastic members and the projections **5** and **8** of the brackets **2,** and **11.** The rotation of the elastic members **6** drives in rotation of the shafts **4,** where from, by means of the gear **17,** the rotary motion is transmitted to a consumer not shown.

The elastic members **6** are made of a resilient material with elastic properties, for example of spring steel or another similar material, in form of a band having a thickness comprised between 1 mm and 250 mm and a width comprised between 2 mm and 900 mm.

The diameter of the elastic member 6 is comprised between 10 mm and 100 m.

In the example according to the invention, the elastic members 6 have a thickness of 9 mm, a width of 50 mm and a diameter of 990 mm.

## Claims

1. Elastic motor comprising at least a first annular-shaped elastic member (6) **characterized in that** the elastic member is supported by means of at least a first bracket assembly **(2,10,11)** consisting of a supporting bracket **(2)** located between a first pressing bracket (**10**) and a second pressing bracket **(11)** for carrying out the straining of said at least first elastic member **(6),** the brackets **(2,10,11)** being fixed on a base plate **(1),** on a circular path according to the projection of the circumference of the elastic member **(6),** wherein the distance between the second pressing bracket **(11)** and the supporting bracket **(2)** is bigger than the distance between the first pressing bracket (**10**) and the supporting bracket **(2)** and wherein the supporting bracket **(2)** comprises at least a first shaft **(4)** with a supporting projection **(5)** of said at least first elastic member **(6)** and each first and second pressing bracket (**10**, **11**) comprises at least a first
shaft **(9)** provided with a pressing projection **(8)** that presses said at least one first elastic member **(6)** against the opposite face of the elastic member **(6)** abutting on the supporting projection **(5),** those first shafts **(9)** belonging to the first pressing bracket (**10**), respectively to the second pressing bracket **(11),** being fixed in a first balancer **(12)** of the second pressing bracket **(11),** respectively in another first balancer **(13)** of the first pressing bracket (**10**), pivoting about a shaft **(14)** fixed in the second pressing bracket **(11),** respectively in the first pressing bracket (**10**), and some adjusting screws **(16),** one for the second pressing bracket **(11),** respectively another one for the first pressing bracket (**10**) whose rotation results in translation of a threaded bushing **(15)** connected to those first balancers **(12, 13),** causing the movement of said first balancers **(12,13)** and the straining of said first elastic member **(6)** and at the end of that first shaft **(4)** of the supporting bracket **(2)** situated at the end from the exterior of the base plate **(1)** being provided a gear **(17)** for transmitting the rotary motion to a consumer.

2. Elastic motor according to claim 1 **characterized in that** in case of a plurality of elastic members **(6),** at the end of each shaft **(4)** belonging to the supporting bracket **(2),** situated at the end from the center of the base plate **(1),** a part **(7)** is fixed that takes over the rotary motion of the shaft **(4)** and which is connected with at least another neighboring part **(7),** which takes over the rotary motion of another shaft (4) provided on the supporting bracket, by means of an appropriate mechanism for taking over the rotary motion of each shaft **(4)** and for the transmission thereof by means of the gear **(17)** to a consumer.

3. Elastic motor according to claims 1 and 2 **characterized in that** the distance between the second pressing bracket **(11)** and the supporting bracket **(2)** is double the distance between the first pressing bracket (**10**) and the supporting bracket **(2).**

4. Elastic motor according to claims 1 to 3 **characterized in that,** in case of a plurality of bracket assemblies **(2,10,11)** said supporting brackets **(2)** are equidistantly arranged on the circular path projected by the circumference of the elastic member **(6).**

5. Elastic motor according to claims 1 to 4 **characterized in that**
the annular-shaped elastic member **(6)** is in form of a band whose faces coming in contact with the supporting projections **(5),** respectively with the pressing projections **(8),** present a concave groove for the positioning in respect to a convex profile of said projections **(5,8).**

## Patentansprüche

1. Elastischer Motor, der mindestens ein erstes ringförmiges elastisches Element (6) umfasst, **dadurch gekennzeichnet, dass** das elastische Element mittels mindestens einer ersten Halterungsbaugruppe (**2**, **10**, **11**) gelagert ist, die aus einer Stützhalterung **(2)** besteht, die sich zwischen einer ersten Druckhalterung **(10)** und einer zweiten Druckhalterung **(11)** befindet, um die Spannung des mindestens einen ersten elastischen Elements **(6)** auszuüben, wobei die Halterungen (**2**, **10**, **11**) auf einer Grundplatte **(1)** auf einer kreisförmigen Bahn entsprechend der Projektion des Umfangs des elastischen Elements **(6)** befestigt sind, wobei der Abstand zwischen der zweiten Druckhalterung **(11)** und der Stützhalterung **(2)** größer ist als der Abstand zwischen der ersten Druckhalterung **(10)** und der Stützhalterung **(2)** und wobei die Stützhalterung **(2)** mindestens eine erste Welle **(4)** mit einem Stützvorsprung **(5)** für das mindestens ein erstes elastisches Element **(6)** umfasst und jede erste und zweite Druckhalterung (**10**, **11)** mindestens eine erste Welle **(9)** umfasst, die mit einem Druckvorsprung **(8)** versehen ist, der das mindestens eine erste elastische Element **(6)** gegen die gegenüberliegende Fläche des elastischen Elements **(6)** drückt, die an den Stützvorsprung **(5)** anstößt, wobei die ersten Wellen **(9),** die zur ersten Druckhalterung **(10)** bzw. zur zweiten Druckhalterung **(11)** gehören, in einem ersten Ausgleicher **(12)** der zweiten Druckhalterung **(11)** bzw. in einem weiteren ersten Ausgleicher **(13)** der ersten Druckhalterung **(10)** befestigt sind und um eine Welle **(14)** schwingen, die in der zweiten Druckhalterung **(11)** jeweils in der ersten Presshalterung **(10)** und einige Einstellschrauben **(16),** eine für die zweite Presshalterung **(11)** bzw. eine weitere für die erste Presshalterung **(10),** deren Drehung zu einer Verschiebung einer mit diesen ersten Ausgleichselementen **(12, 13)** verbundenen Gewindebuchse **(15)** führt, wodurch Bewegung der ersten Ausgleichselemente **(12, 13)** und die Spannung des ersten elastischen Elements **(6)** bewirkt und am Ende der ersten Welle **(4)** der Halterung **(2),** die sich am Ende außerhalb der Grundplatte **(1)** befindet, ein Getriebe **(17)** vorgesehen ist, um die Drehbewegung auf einen Verbraucher zu übertragen.

2. Elastischer Motor nach Anspruch 1, **dadurch gekennzeichnet, dass** im Falle einer Vielzahl von elastischen Elementen **(6)** am Ende jeder Welle **(4),** die zu der Stützhalterung **(2)** gehört und sich am Ende von der Mitte der Grundplatte **(1)** befindet, ein Teil **(7)** befestigt ist, das die Drehbewegung der Welle **(4)** übernimmt und das mit mindestens einem weiteren benachbarten Teil **(7)** verbunden ist, das die Drehbewegung einer weiteren, an der Halterung vorgesehenen Welle **(4)** übernimmt, und zwar mittels eines geeigneten Mechanismus zur Übernahme der Drehbewegung jeder Welle **(4)** und zu deren Übertragung mittels des Getriebes **(17)** auf einen Verbraucher.

3. Elastischer Motor gemäß den Ansprüchen 1 und 2, **dadurch gekennzeichnet, dass** der Abstand zwischen der zweiten Druckhalterung **(11)** und der Stützhalterung (2) doppelt so groß ist wie der Abstand zwischen der ersten Druckhalterung **(10)** und der Stützhalterung **(2).**

4. Elastischer Motor gemäß den Ansprüchen 1 bis 3, **dadurch gekennzeichnet, dass** im Falle einer Vielzahl von Halterungsbaugruppen (**2, 10**, **11)** die Stützhalterungen **(2)** in gleichen Abständen auf der Kreisbahn angeordnet sind, die durch den Umfang des elastischen Elements **(6)** projiziert wird.

5. Elastischer Motor gemäß den Ansprüchen 1 bis 4, **dadurch gekennzeichnet, dass** das ringförmige elastische Element **(6)** die Form eines Bandes hat, dessen Flächen, die mit den Stützvorsprüngen **(5)** bzw. mit den Andruckvorsprüngen **(8)** in Kontakt kommen, eine konkave Nut zur Positionierung in Bezug auf ein konvexes Profil der Vorsprünge **(5, 8)** aufweisen.

## Revendications

1. Moteur élastique comprenant au moins un élément élastique de forme annulaire **(6), caractérisé en ce que** l'élément élastique est soutenu par au moins un premier ensemble de supports **(2, 10, 11)** formé par un élément de support **(2)** situé entre un premier support de pression **(10)** et un second support de pression **(11)** pour réussir à tensionner ledit premier élément élastique **(6),** les supports **(2, 10, 11)** sont fixés sur une plaque de base **(1),** sur une trajectoire circulaire correspondant à la projection de la circonférence de l'élément élastique **(6),** où la distance entre le second support de pression **(11)** et l'élément de support **(2)** est supérieure à la distance entre le premier support de pression **(10)** et l'élément de support **(2)** et dans lequel l'élément de support **(2)** comprend au moins un premier arbre **(4)** avec une saillie de support **(5)** dudit premier élément élastique **(6)** et chaque premier et deuxième support de pression (**10**, **11)** comprend au moins un premier arbre **(9)** pourvu d'une saillie de pression **(8)** qui presse ledit premier élément élastique **(6)** contre la surface opposée de l'élément élastique **(6)** en butée sur la saillie de support **(5),** les premiers arbres **(9)** appartenant au premier support de pression **(10),** respectivement au deuxième support de pression **(11),** étant fixés dans un premier équilibreur **(12)** du deuxième support de pression **(11),** respectivement dans un autre premier équilibreur **(13)** du premier support de pression **(10),** pivotant autour d'un arbre **(14)** fixé dans le deuxième support de pression **(11),** respectivement dans le premier support de pression **(10),** et des vis de réglage **(16),** un pour le deuxième support de pression **(11),** respectivement un autre pour le premier support de pression **(10)** dont la rotation entraîne la translation d'une douille filetée **(15)** connectée à ces premiers équilibreurs **(12, 13),** provoquant le mouvement desdits premiers équilibreurs **(12, 13)** et la tension dudit premier élément élastique **(6)** et à l'extrémité de ce premier arbre **(4)** de l'élément de support **(2)** situé à l'extrémité de l'extérieur de la plaque de base **(1)** étant prévu d'un engrenage **(17)** pour transmettre le mouvement de rotation à un consommateur.

2. Moteur élastique selon la revendication 1, **caractérisé en ce que** dans le cas d'une pluralité d'éléments élastiques **(6),** à l'extrémité de chaque arbre **(4)** appartenant à l'élément de support **(2),** situé à l'extrémité du centre de la plaque de base **(1),** il y a une pièce **(7)** fixée qui reprend le mouvement de rotation de l'arbre **(4)** et qui est reliée à au moins une autre pièce adjacente **(7),** qui reprend le mouvement de rotation d'un autre arbre **(4)** prévu sur l'élément de support par l'intermède d'un mécanisme approprié qui reprend le mouvement de rotation de chaque arbre **(4)** et pour la transmission de celui-ci au moyen de l'engrenage **(17)** vers un consommateur.

3. Moteur élastique selon les revendications 1 et 2, **caractérisé en ce que** la distance entre le deuxième support de pression **(11)** et l'élément de support **(2)** est le double de la distance entre le premier support de pression **(10)** et l'élément de support **(2).**

4. Moteur élastique selon les revendications 1 à 3, **caractérisé en ce que,** dans le cas d'une pluralité d'ensembles de supports **(2, 10, 11),** lesdits élément de support **(2)** sont placés de manière équidistante sur la trajectoire circulaire projetée par la circonférence de la partie élastique **(6).**

5. Moteur élastique selon les revendications 1 à 4 **caractérisé en ce que** l'élément élastique de forme annulaire **(6)** a la forme d'une bande dont les facettes venant en contact avec les saillies d'appui **(5),** respectivement avec les saillies de pression **(8),** présentent une rainure concave pour l'emplacement par rapport à un profil convexe desdites saillies **(5,8).**
